# EUROPEAN PATENT APPLICATION

(11) **EP 2 876 804 A1**
(43) Date of publication of application: **27.05.2015**
(21) Application number: 12881394.6
(22) Date of filing: 18.07.2012
(51) Int. Cl.: H02M 7/537

(54) **POWER CONVERTER**

(71) Applicant: Mitsubishi Electric Corporation, Tokyo 100-8310 (JP)
(72) Inventor: HARADA Ryotaro, Tokyo 100-8310 (JP)
(74) Representative: Sajda, Wolf E.
(86) International application number: PCT/JP2012/068239
(87) International publication number: WO 2014/013574

(57) **Abstract**

A controller (2), when activating a power converter (1), outputs a gate signal to close a switch (SW1) for a set conduction time, and while the power converter (1) is active, outputs a gate signal to alternately close switches (SW1, SW2) for the conduction time. The controller (2), when stopping the power converter (1), outputs a gate signal to open the switches (SW1, SW2) after the switch (SW2) that was not closed upon the activation is closed for the conduction time without closing the switch (SW1) that was closed upon the activation.

## Description

### Technical Field

The present invention relates to a power converter.

### Background Art

For a power converter including a transformer, if the bias of the magnetic flux density applied to the primary winding of the transformer (bias magnetism) accumulates and the transformer becomes magnetically saturated, there is a risk of circuit elements becoming damaged due to a flow of an overcurrent.

In the technology disclosed in Patent Literature 1, the current polarity, when an overcurrent flows through the primary winding of the transformer, is stored, and during reactivation, the magnetic saturation of the transformer is eliminated by controlling a switching element so that the current of opposite polarity to the stored current polarity flows through the primary winding of the transformer.

The switching power circuit disclosed in Patent Literature 2 suppresses the bias magnetism in the transformer by treating the secondary winding of the transformer as singular, and providing two independent circuits that respectively perform half-wave rectification on the voltage induced in the secondary winding.

### List of Citations

### Patent Literature

Patent Literature 1: Unexamined Japanese Patent Application Kokai Publication JP H2-036 769 A
Patent Literature 2: Unexamined Japanese Patent Application Kokai Publication JP H4-017 567 A

### Summary of the Invention

### Technical Problem

The technology disclosed in Patent Literature 1 requires a storage circuit that stores the current polarity when an overcurrent has occurred, while the switching power circuit disclosed in Patent Literature 2 requires two independent circuits that perform half-wave rectification on the secondary side. Thus, there is a problem of the circuitry becoming complicated.

The present invention has been devised in light of circumstances like the above, takes as an object to provide a power converter which is adapted to prevent bias magnetism in a transformer with a simple configuration.

### Solution to the Problem

In order to achieve the above object, a power converter according to the present invention is a power converter, provided with a resonance transformer that includes a primary winding and a secondary winding, that converts input direct current (DC) voltage into alternating current (AC) voltage and then outputs the AC voltage, and includes two resonance capacitors, two switches, and a controller.

The two resonance capacitors are connected in series, and the DC voltage is divided and respectively applied to the two resonance capacitors. The two switches are connected to the primary winding of the resonance transformer and a respectively corresponding resonance capacitor from among the two resonance capacitors, and apply a voltage to the primary winding of the resonance transformer on the basis of a voltage between the terminals of the connected resonance capacitor when either one is closed.

The controller, when activating the power converter, outputs a gate signal to close a set one of the switches for a set conduction time, and after that, outputs a gate signal to alternately close the switches for the conduction time, and when stopping the power converter, outputs the gate signal to open the two switches after the switch that was not closed upon the activation is closed for the conduction time without closing the switch that was closed upon the activation.

### Advantageous Effects of the Invention

According to the present invention, it becomes possible to provide a power converter which is adapted to prevent bias magnetism in a transformer with a simple configuration.

### Brief Description of the Drawings

- FIG. 1: is a block diagram illustrating an exemplary configuration of a power conversion device equipped with a power converter according to an embodiment of the present invention; and
- FIG. 2: is a diagram illustrating an example of voltage changes in resonance capacitors and a resonance transformer in the embodiment according to the invention.

### Description of Embodiments

Hereinafter, an exemplary embodiment of the present invention will be described in detail and with reference to the drawings. Note that in the drawings, the same signs are given to the same or similar parts.

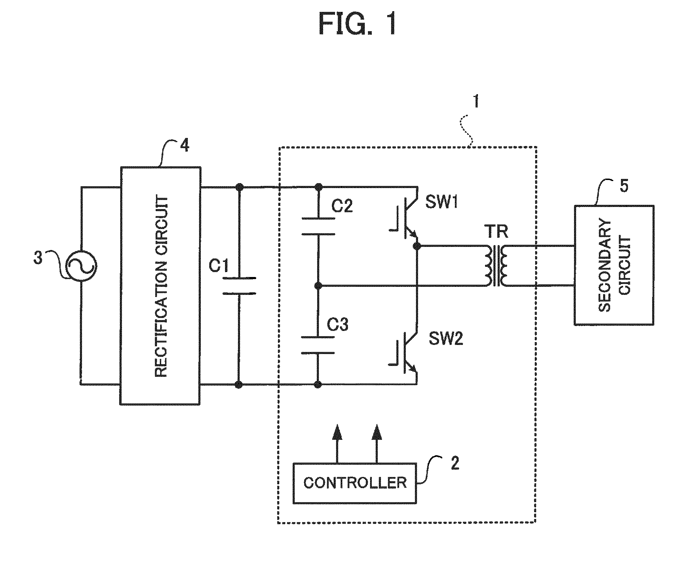

FIG. 1 is a block diagram illustrating an exemplary configuration of a power conversion device equipped with a power converter according to an embodiment of the present invention. The power conversion device is equipped with a power converter 1, a power source 3, a rectification circuit 4, a smoothing capacitor C1, and a secondary circuit 5. The AC voltage output by the power source 3 is converted to DC by the rectification circuit 4, smoothed by the smoothing capacitor C 1, and supplied to the power converter 1.

The power converter 1 converts the input DC voltage into an AC voltage, and outputs the AC voltage to the secondary circuit 5. The secondary circuit 5 may convert AC into DC and then output the DC, or output AC directly. It may also be configured so that the power source 3 is a DC power source, and instead of the rectification circuit 4, a coil connected to the positive side of the power source 3 and the smoothing capacitor C1 is provided.

The power converter 1 is equipped with resonance capacitors C2 and C3, switches SW1 and SW2, a resonance transformer TR, and a controller 2. The resonance capacitors C2 and C3 are connected in series. Before the power converter 1 is activated, a divided DC voltage is applied to the resonance capacitors C2 and C3, respectively. The capacitance of the resonance capacitors C2 and C3 may be the same value or different values. When the capacitance of the resonance capacitors C2 and C3 is the same, the value of the voltage of the resonance capacitors C2 and C3 is the same.

The resonance capacitors C2 and C3 may also be made up of multiple capacitors connected in series and/or multiple capacitors connected in parallel. In this case, the capacitance of the resonance capacitors C2 and C3 is the combined capacitance of the multiple capacitors. Likewise, the switches SW1 and SW2 may also be made up of multiple elements.

The controller 2 outputs a gate signal for opening and closing the switches SW1 and SW2. The controller 2 activates the power converter 1 when the input voltage into the power converter 1 detected by an input voltage detector not illustrated in the drawings enters a set range, for example.

The controller 2 stops the power converter 1 when the input voltage into the power converter 1 exceeds a threshold value and becomes an overvoltage, for example. The controller 2 also stops the power converter 1 when the current flowing through the resonance transformer TR detected by an overcurrent detector not illustrated in the drawings exceeds a threshold value and becomes an overcurrent, for example.

In the example of FIG. 1, the switches SW1 and SW2 are insulated gate bipolar transistors (IGBTs), but the switches SW1 and SW2 are not limited to IGBTs, and may be any element controllable with a gate signal. The switches SW1 and SW2 are connected in series, and are connected in parallel to capacitors C2 and C3 .

The resonance transformer TR has a primary winding and a secondary winding, and the ends of the primary winding of the resonance transformer TR are connected to the connection point between the resonance capacitors C2 and C3, and to the connection point between the switches SW1 and SW2, respectively.

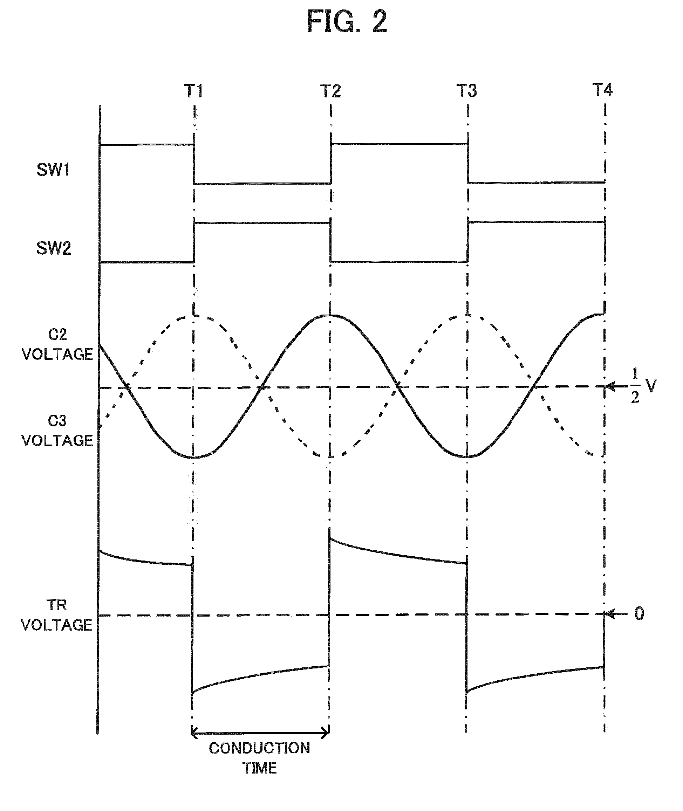

FIG. 2 is a diagram illustrating an example of voltage changes in resonance capacitors and a resonance transformer in the embodiment. FIG. 2 will be used to describe operation of the power converter 1. Suppose that the capacitance of the resonance capacitors C2 and C3 is the same value, and that when the controller 2 activates the power converter 1, the controller 2 outputs a gate signal that closes the switch SW1 for a set conduction time.

In FIG. 2, the spacing between the single-dot chain lines is one conduction time for one switch (SW1 or SW2). Also, while the power converter 1 is active, the controller 2 outputs a gate signal to alternately close the switches SW1 and SW2 for the conduction time as illustrated in FIG. 2. For the sake of simplicity, discussion of a short circuit prevention time during which the switches SW1 and SW2 are both open is omitted herein.

In FIG. 2, voltage changes of the resonance capacitor C2 is indicated by the solid line, whereas voltage changes of the resonance capacitor C3 is indicated by the dotted line. While the switch SW1 is closed and the switch SW2 is open, the voltage of the resonance capacitor C2 falls, whereas the voltage of the resonance capacitor C3 rises. While the switch SW1 is open and the switch SW2 is closed, the voltage of the resonance capacitor C2 rises, whereas the voltage of the resonance capacitor C3 falls. At any arbitrary time, the total of the voltage of the resonance capacitor C2 and the voltage of the resonance capacitor C3 is constant, and matches the voltage input into the power converter 1.

Since the capacitance of the resonance capacitors C2 and C3 is the same, provided that V is the voltage input into the power converter 1, the voltages of the resonance capacitors C2 and C3 each vary centered on 1/2 V.

The waveforms of the voltages of the resonance capacitors C2 and C3 are waveforms with a phase shift of 180°, as illustrated in FIG. 2. The current of the resonance transformer TR has a different polarity every conduction time, but the change in amplitude is the same. Consequently, as illustrated in FIG. 2, a voltage having a different polarity every conduction time but the same change in amplitude is applied to the primary winding of the resonance transformer TR.

Suppose that from time T2 to time T3, the current of the resonance transformer TR exceeds a threshold value, and the overcurrent detector detects an overcurrent, for example. In the related art, the power converter 1 is stopped immediately after detection of an overcurrent, or the power converter 1 is stopped at time T3 after the elapse of the conduction time from time T2 when the switch SW1 that was closed when the overcurrent was detected is closed. In the case of stopping the power converter 1 at time T3, the voltage of the resonance capacitor C3 enters a state of being larger than the voltage of the resonance capacitor C2.

In the case of using the power converter 1 to supply power to an electric motor that produces motive force for a train, the capacitance of the resonance capacitors C2 and C3 must be configured to a comparatively large value from several microfarads to several tens of microfarads, and several minutes are required for discharge.

In addition, since there is demand for the power converter 1 to rapidly reactivate after stopping due to detecting an overvoltage or overcurrent, when the power converter 1 stops at time T3, the voltage of the resonance capacitor C3 enters a state of being larger than the voltage of the resonance capacitor C2 at the time of activation.

For example, after stopping the power converter 1 at time T3, if the power converter 1 is activated and the switch SW1 is closed, the resonance capacitor C3 is additionally charged. For this reason, the voltage of the resonance capacitor C3 varies centered on a value larger than 1/2 V, whereas the voltage of the resonance capacitor C2 varies centered on a value smaller than 1/2 V.

The magnetic flux density applied to the primary winding of the resonance transformer TR during the conduction time is a value obtained by multiplying the voltage applied to the primary winding of the resonance transformer TR by the conduction time. When the voltage applied to the primary winding of the resonance transformer TR has a different polarity every conduction time but the same change in amplitude, the magnetic flux density applied to the primary winding of the resonance transformer TR as a result of closing the switch SW1 during the conduction time is cancelled out by closing the switch SW2 during the conduction time. Consequently, when the switches SW1 and SW2 are alternately closed for the conduction time while the power converter 1 is active, bias magnetism in the resonance transformer TR is not produced.

However, as discussed above, if the power converter 1 is activated and the switch SW1 is closed after stopping the power converter 1 at time T3, the magnitude of the voltage applied to the primary winding of the resonance transformer TR becomes a different value every conduction time, and bias magnetism in the resonance transformer TR is produced.

In the present embodiment, suppose that when activating the power converter 1, the controller 2 outputs a gate signal that closes the switch SW1 for a set conduction time. When stopping the power converter 1, the controller 2 outputs a gate signal to open the switches SW1 and SW2 after the switch SW2 that was not closed upon the activation, is closed for the conduction time without closing switch SW1 that was closed upon the activation.

In other words, when an overcurrent is detected between times T2 and T3, the controller 2 outputs a gate signal to open the switches SW1 and SW2 at time T4 immediately after the switch SW2 is closed for the conduction time. In the case of stopping the power converter 1 at time T4, the voltage of the resonance capacitor C2 enters a state of being greater than the voltage of the resonance capacitor C3.

When subsequently reactivating the power converter 1, the controller 2 outputs a gate signal to close the switch SW1 for the conduction time, and thus the resonance capacitor C3 is charged, and the voltages of the resonance capacitors C2 and C3 vary centered on 1/2 V as in FIG. 2. Since the voltage applied to the primary winding of the resonance transformer TR has a different polarity every conduction time but the same change in amplitude, bias magnetism in the resonance transformer TR is not produced.

As discussed above, when activating the power converter 1, the controller 2 outputs a gate signal to close a set one of either of the switches SW1 and SW2. By determining in advance the switch (SW1 or SW2) to close when activating the power converter 1, a storage circuit is not required, thereby enabling simplification of the configuration of the power converter 1. Unlike the above example, when activating the power converter 1, the controller 2 may also output a gate signal to close the switch SW2.

If the capacitances of the resonance capacitors C2 and C3 differ, the average value of the maximum value and the minimum value of the voltages of the resonance capacitor C2 differs from that of capacitor C3, but at any arbitrary time, the total of the voltage of the resonance capacitor C2 and the voltage of the resonance capacitor C3 is constant, and matches the voltage input into the power converter 1. In addition, the current of the resonance transformer TR has a different polarity every conduction time, but the change in amplitude is the same.

Consequently, the voltage applied to the primary winding of the resonance transformer TR is a voltage having a different polarity every conduction time, but the same change in amplitude. Even if the capacitances of the resonance capacitors C2 and C3 differ, by opening and closing the switches SW1 and SW2 as discussed above, it is possible to suppress bias magnetism in the resonance transformer TR.

As described above, according to the power converter 1 in accordance with the present embodiment, it becomes possible to prevent bias magnetism in the resonance transformer TR with a simple configuration.

The switches SW1 and SW2 may also be configured to use switching elements that are formed by wide-bandgap semiconductors that have a larger bandgap compared to silicon. A wide-bandgap semiconductor refers to, for example, silicon carbide, gallium nitride-based materials, or diamond. Switching elements formed by wide-bandgap semiconductors have a high withstanding voltage and allowable current density. For this reason, more compact switching elements are possible, and by using more compact switching elements, it becomes possible to make a semiconductor module with embedded switching elements more compact.

Since wide-bandgap semiconductors also have a high heat resistance, it is possible to make the radiating fins of a heatsink more compact, or use an air cooler instead of a water chiller, thereby enabling the semiconductor module to be even more compact. Furthermore, since the power loss is low, higher efficiency in the switching elements becomes possible, and thus higher efficiency of the semiconductor module becomes possible.

An embodiment of the present invention is not limited to the foregoing embodiments. The circuit configuration of the power converter 1 is not limited to the circuit in FIG. 1.

Another circuit configuration is acceptable insofar as the circuit configuration is provided with two resonance capacitors C2 and C3 connected in series to which a divided input voltage is respectively applied, and two switches SW1 and SW2, connected to the primary winding of the resonance transformer TR and a respectively corresponding resonance capacitor C2 or resonance capacitor C3, that apply a voltage to the primary winding of the resonance transformer TR on the basis of voltage between the terminals of the connected resonance capacitor C2 or resonance capacitor C3 when either one is closed.

The foregoing describes some example embodiments for explanatory purposes. Although the foregoing discussion has presented specific embodiments, persons skilled in the art will recognize that changes may be made in form and detail without departing from the broader spirit and scope of the invention.

Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

### Industrial Applicability

The present invention may be suitably implemented in a power converter that converts input DC voltage into AC voltage and then outputs the AC voltage.

### List of Reference Signs

- 1: power converter
- 2: controller
- 3: power source
- 4: rectification circuit
- 5: secondary circuit
- C1: smoothing capacitor
- C2: resonance capacitor
- C3: resonance capacitor
- SW1: switch
- SW2: switch
- TR: resonance transformer

## Claims

1. A power converter, provided with a resonance transformer that includes a primary winding and a secondary winding, that converts input DC voltage into AC voltage and then outputs the AC voltage, the power converter comprising:
two resonance capacitors connected in series to which the DC voltage is divided and respectively applied;
two switches, connected to the primary winding of the resonance transformer and a respectively corresponding resonance capacitor from among the two resonance capacitors, that apply a voltage to the primary winding of the resonance transformer on the basis of a voltage between terminals of the connected resonance capacitor when either one is closed; and
a controller that, when activating the power converter, outputs a gate signal to close a set one of the switches for a set conduction time, and after that, outputs a gate signal to alternately close the switches for the conduction time, and when stopping the power converter, outputs the gate signal to open the two switches after the switch that was not closed upon the activation is closed for the conduction time without closing the switch that was closed upon the activation.

2. The power converter according to claim 1, wherein
the two switches are connected in series and are connected in parallel to the two resonance capacitors , and
the ends of the primary winding of the resonance transformer are respectively connected to a connection point between the two resonance capacitors and a connection point between the two switches.

3. The power converter according to claim 1 or 2, wherein the switches are formed by wide-bandgap semiconductors.

4. The power converter according to claim 3, wherein
the wide-bandgap semiconductor is silicon carbide, a gallium nitride-based material, or diamond.
